# EUROPÄISCHE PATENTSCHRIFT

(11) **EP 1 189 799 B1**
(45) Veröffentlichungstag und Bekanntmachung des Hinweises auf die Patenterteilung: **22.10.2003**
(21) Anmeldenummer: 00929549.4
(22) Anmeldetag: 23.05.2000
(51) Int. Cl.: B62D 65/00, B66F 7/22

(54) **BEARBEITUNGSSTATION IN FERTIGUNGSSTRASSEN FÜR KFZ**
PROCESSING STATION ON A MOTOR VEHICLE ASSEMBLY LINE
STATION D'USINAGE POUR LIGNES DE PRODUCTION D'AUTOMOBILES

(30) Priorität: 26.06.1999 DE 19929443
(43) Veröffentlichungstag der Anmeldung: 27.03.2002
(73) Patentinhaber: ThyssenKrupp Technologies AG, 45128 Essen (DE)
(72) Erfinder: JÄCK, Kurt, D-88236 Aulendorf (DE); LEUTER, Helmut, D-88364 Wolfegg (DE); RIEGGER, Berthold, D-88267 Vogt (DE); BRAUCHLE, Anton, D-88368 Bergatreute (DE)
(74) Vertreter: Dahlkamp, Heinrich-Leo, Dipl.-Ing.
(86) Internationale Anmeldenummer: EP0004688
(87) Internationale Veröffentlichungsnummer: WO01000479

(56) Entgegenhaltungen:
- EP-A- 0 526 863
- WO-A-89/00938
- DE-A- 4 436 901
- DE-A- 4 437 901
- US-A- 1 519 357
- US-A- 2 610 747
- US-A- 4 295 427
- US-A- 4 599 034

## Beschreibung

Die Erfindung betrifft eine Bearbeitungsstation in Fertigungsstraßen für Kfz, mit einer Aufnahmeeinrichtung für ein Kfz-Teil oder ein dafür vorgesehenes Transportmittel, die um eine horizontale Drehachse verdrehbar ist, mit Förderern, die vor bzw. hinter der Bearbeitungsstation enden, und mit einem weiteren, zwischen den Förderern angeordneten heb- und senkbaren Förderer.

Derartige Bearbeitungsstationen, die auch als Lift- und Rotationseinheit bezeichnet werden, können an verschiedenen Stellen einer Fertigungsstraße eingesetzt werden, um Kfz-Teile, insbesondere Karosserieteile, zusammenzufügen oder zu bearbeiten. Das kann manuell oder im automatisierten Betrieb erfolgen. Dazu sind die Antriebe für die Höhenverstellung und für das Drehen bzw. Verschwenken der Aufnahmerahmen mit Steuer- und Positioniereinrichtungen ausgerüstet, damit das auf den Aufnahmerahmen verspannte Kfz-Teil in eine für die Bearbeitung gewünschte Position gebracht werden kann. Zur Beschickung in Längsrichtung, also in Richtung der Drehachse der Aufnahmeeinrichtung, sind die vor bzw. hinter der Bearbeitungsstation endenden Förderer angeordnet.

Bei einer bekannten Bearbeitungsstation der eingangs beschriebenen Gattung (DE 44 37 901 A1, Ausführungsform entsprechend Fig. 1-4) weist die Aufnahmeeinrichtung einen einzigen Aufnahmerahmen auf, der aus zwei Aufnahmearmen besteht und der entweder kragartig an einem Ende der Bearbeitungsstation an einem Drehkranz oder an beiden Enden an je einem Drehkranz befestigt ist. Das auf einem Transportmittel befindliche Kfz-Teil wird bei dieser Ausführungsform von den vor der Bearbeitungsstation endenden Förderern auf den innerhalb der Bearbeitungsstation befindlichen angehobenen weiteren Förderer transportiert. Der weitere Förderer wird dann so weit abgesenkt, bis das Kfz-Teil außerhalb des Transportmittels auf dem Aufnahmerahmen aufliegt. Anschließend muß das Kfz-Teil mit dem Aufnahmerahmen verriegelt und von dem Transportmittel gelöst werden, damit der weitere Förderer mit dem auf ihm arretierten Transportmittel weiter abgesenkt werden kann. Das Lösen des Kfz-Teils von dem Transportmittel vor der Bearbeitung und das spätere Wiederverriegeln stellen zusätzliche Arbeitsgänge dar. Durch die feste Anordnung der horizontalen Anordnung der Drehachse des Aufnahmerahmens ist außerdem keine Flexibilität in der Bearbeitungshöhe gegeben. Zusätzlich beeinträchtigen die in Längsrichtung verlaufenden Aufnahmearme des Aufnahmerahmens die freie Zugänglichkeit von der Seite. Und schließlich ist der Herstellungs- bzw. Beschaffungsaufwand für den Drehkranz bzw. die Drehkränze sehr erheblich.

Bei einer weiteren Bearbeitungsstation (EP 0 942 673 A1) ist jeder Aufnahmerahmen an jeweils nur einer Säule gehalten, die sich mittig vor dem Aufnahmerahmen befindet und deshalb das Beschicken der Bearbeitungsstation mit einem Kfz-Teil oder einem Transportmittel (Transportskid) für das Kfz-Teil behindert oder verhindert Das Kfz-Teil kann deshalb nur von der Seite her zwischen die Säulen eingebracht und auf den Aufnahmerahmen abgesetzt sowie damit verspannt werden.

Bei einer anderen Ausführung (DE 44 04 422) erstreckt sich zwischen den mittig angeordneten Säulen ein durchgehender Rotor mit mehreren umfangseitig am Rotor angeordneten Aufnahmen für das Kfz-Teil bzw. für ein Transportskid. Damit können zwar die Kfz-Teile bzw, das Transportskid in Richtung der Rotordrehachse zu den Aufnahmen gebracht und damit verspannt werden, der Rotor mit den Aufnahmen ist aber nicht höhenverstellbar und außerdem behindert die Rotorkonstruktion eine manuelle oder automatische Bearbeitung des Kfz-Teils.

Aus der US 4 295 427 ist schließlich noch eine Reparaturwerkstatt für Eisenbahnwagen, insbesondere Eisenbahngüterwagen, mit einer Bearbeitungsstation bekannt. Durch die gesamte Werkstatt führt ein Gleis, auf dem die Eisenbahnwagen selbständig in die Bearbeitungsstation einfahren und diese - mit neuen bzw. reparierten Drehgestellen - wieder verlassen. Die Bearbeitungsstation weist an jedem Ende ein längsverfahrbares Portal mit je einer synchron höhenverstellbaren Quertraverse und einem an dieser verdrehbar angeordneten Aufnahmearm auf, der mit einem Kupplungselement und zwei Spannketten versehen ist, mit denen der Wagenkasten erfaßt und von den Drehgestellen abgehoben, um seine Längsachse gedreht und wieder auf gegebenenfalls andere Drehgestelle abgesetzt werden kann. Für einen Transport von einem auf einem Transportmittel, insbesondere einem Transportskid, befindlichen Kfz-Teil in die Bearbeitungsstation ist die Werkstatt weder geeignet noch vorgesehen.

Aufgabe der Erfindung ist es, eine Bearbeitungsstation anzugeben, die von allen Seiten frei zugänglich und beschickbar ist.

Diese Aufgabe wird dadurch gelöst, daß die Aufnahmeeinrichtung aus zwei mit gegenseitigem Abstand angeordneten Aufnahmerahmen besteht, die je an einer Quertraverse angeordnet und um die horizontale Drehachse synchron verdrehbar sind, daß jede Quertraverse an zwei beidseits der Drehachse angeordneten Säulen gelagert bzw. geführt ist und beide Quertraversen synchron höhenverstellbar sind, daß die Förderer vor den Quertraversen oberhalb der abgesenkten Quertraversen bzw. den abgesenkten Aufnahmerahmen enden und daß der gegenseitige Abstand dieser Säulen größer als die Breite des Kfz-Teils oder eines Transportmittels für das Kfz-Teil ist. Insgesamt weist die Bearbeitungsstation also vier Säulen auf, die im Bereich eines von ihnen aufgespannten Rechtecks angeordnet sind, so daß Kfz-Teile oder dafür vorgesehene Transportskids von allen Seiten in die Bearbeitungsstation eingebracht werden können. Da die Kfz-Teile oder die Transportskids nur an ihren jeweiligen Enden mit den Aufnahmerahmen verspannt sind, sind bei entsprechender Höhenverstellung und Drehung der Aufnahmerahmen alle Bereiche des in der Bearbeitungsstation befindlichen Kfz-Teils sowohl für eine manuelle als auch für eine automatische Bearbeitung frei zugänglich.

Vorzugsweise ist eine der Säulen jeder Quertraverse für die Aufnahmerahmen als Antriebssäule und die andere Säule als Führungssäule ausgebildet.

Der heb- und senkbare Förderer braucht sich lediglich zwischen den Enden der Aufnahmerahmen zu erstrecken. Bei einer anderen Ausführung kann der heb- und senkbare Förderer sich bis in den Bereich der Aufnahmerahmen erstrecken und endseitige Ausnehmungen für die Passage der Aufnahmerahmen bei einer Relativbewegung zwischen Aufnahmerahmen und Förderer aufweisen. Alle Förderer sind vorzugsweise als Rollenförderer ausgebildet.

Im folgenden wird ein in der Zeichnung dargestelltes Ausführungsbeispiel der Erfindung erläutert; es zeigen:

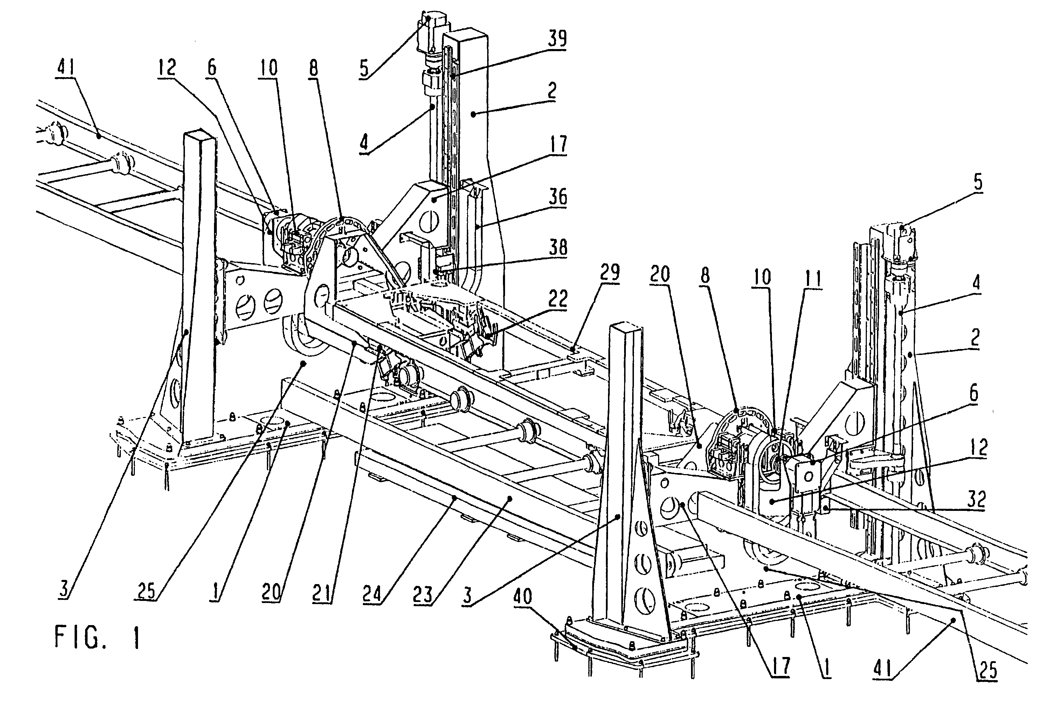

- Figur 1: schematisch und in perspektivischer Darstellung eine Bearbeitungsstation in Fertigungsstraßen für Kfz,

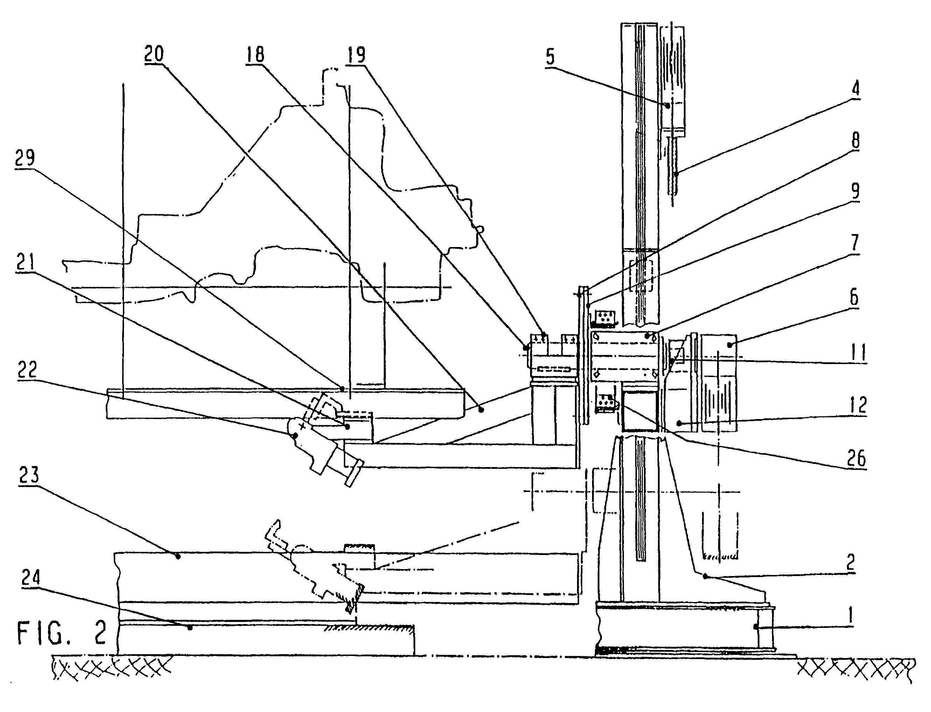

- Figur 2: teilweise eine Seitenansicht des Gegenstandes nach Figur 1,
- Figur 3: eine Stirnansicht des Gegenstandes nach Figur 1,
- Figur 4: eine Draufsicht auf den Gegenstand nach Figur 2 bzw. Figur 3,
- Figur 5: den Gegenstand nach Figur 3 in einer anderen Funktionsstellung.

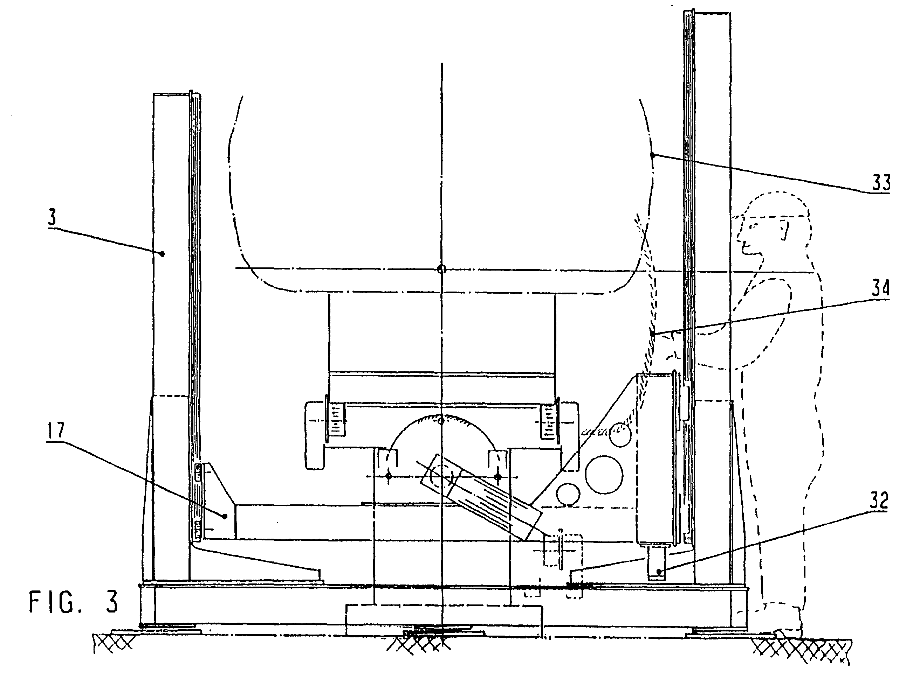

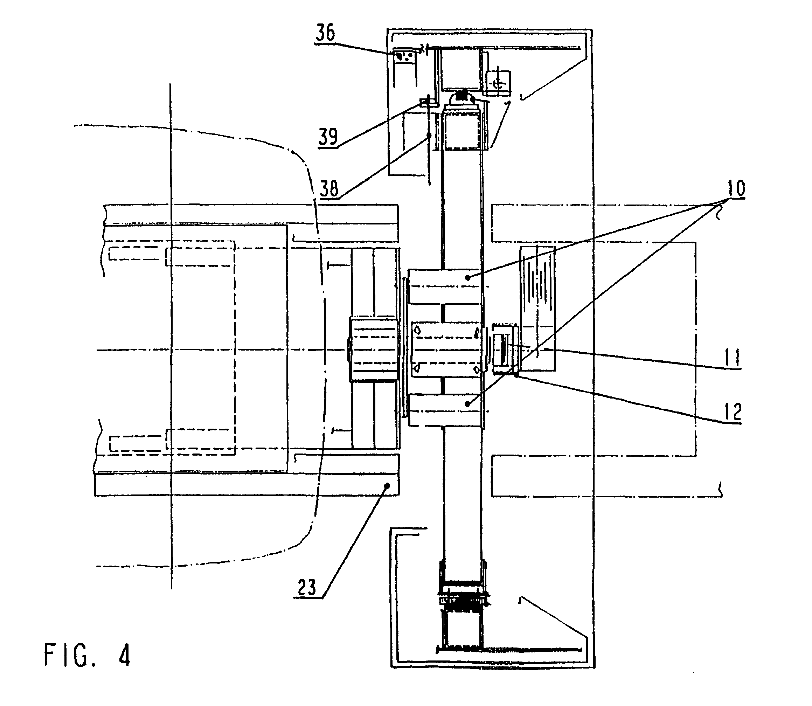

Auf einem nicht dargestellten Fundament sind mit gegenseitigem Abstand zwei unabhängig voneinander auszurichtende Grundplatten 1 angeordnet. Auf jeder der Grundplatten ist eine Antriebssäule 2 und eine Führungssäule 3 montiert. In der Antriebssäule 2 ist eine Gewindespindel 4 mit Antriebsmotor 5 gelagert, die zur Höhenverstellung einer sich zwischen den beiden Säulen 2, 3 erstreckenden Quertraverse 17 dient, welche in der Führungssäule 3 lediglich geführt ist. Der Abstand der beiden Säulen 2, 3 und damit auch die Breite der Quertraverse 17 ist größer als die Breite eines in den Figuren 3, 4 und 5 mit strichpunktierten Linien angedeuteten Kfz-Teils 33.

Zur manuellen und maschinellen Sicherheit bei der exakten Höhenpositionierung der Quertraverse 17 dient eine längs der Führungssäule 2 bzw. 3 angeordnete Lochleiste 39, der ein an der Quertraverse 17 angeordneter pneumatischer Abstecher 38 zugeordnet ist. Der Antriebsmotor 5 für die Höhenverstellung erhält seine Energie über eine Energiekette 36.

Jede Quertraverse 17 trägt einen Lagerbock 7 für eine darin gelagerte Welle 18. Die Wellen 18 fluchten miteinander, wenn die Quertraverse 17 in gleicher Höhe ausgerichtet sind. An jeder Welle 18 ist an ihrem der anderen Quertraverse 17 zugewandten Ende über eine Klemmeinheit 19 ein Aufnahmerahmen 20 befestigt, der eine Auflage 21 für ein darauf mittels einer Spanneinheit 22 verspannbares Kfz-Teil 33 oder ein Transportskid aufweist.

Auf der anderen Seite der Quertraverse 17 ist an einem Motorträger 12 ein Antriebsmotor 6 gehalten, der über eine Kupplung 11 die Welle 18 in Drehung versetzen kann. Der Antriebsmotor 6 erhält seine Energie über eine Energiekette 26.

Zur exakten Drehpositionierung des Aufnahmerahmens 20 dient eine Positionierscheibe 8 mit einer daneben angeordneten Abstechscheibe 9 und einem zugeordneten pneumatischen Abstecher 10.

Beidseits der Bearbeitungsstation erstrecken sich Rollenförderer 41, die vor den Quertraversen 17 enden, und zwar oberhalb der Quertraversen 17 mit den daran befindlichen Aggregaten, wenn die Quertraversen 17 soweit abgesenkt sind, daß sie mit einem Festanschlag 32 auf einem zugeordneten Widerlager abgestützt sind.

Zwischen den beiden Quertraversen befindet sich ein mittels eines Hebers 24 heb- und senkbarer Rollenförderer 23, der bei der dargestellten Ausführung endseitige Ausnehmungen 25 aufweist, die so groß sind, daß die Aufnahmerahmen 20 bei der Relativbewegung zwischen den Aufnahmerahmen 20 und dem Rollenförderer 23 passieren können.

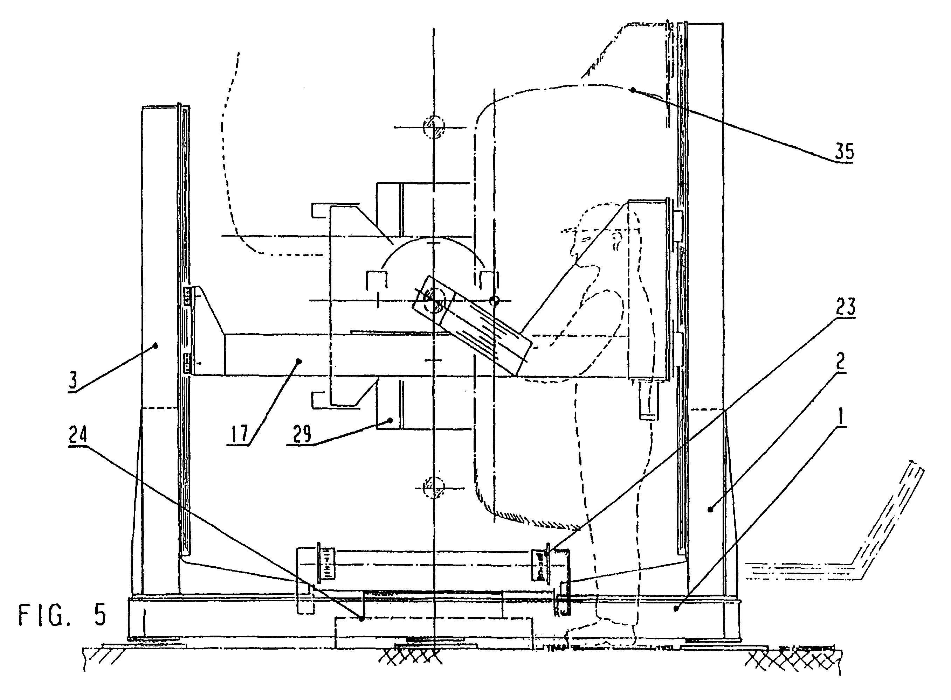

Zum Beschicken der Bearbeitungsstation werden die Quertraversen 17 nach unten gefahren, bis ihr Festanschlag 32 auf das zugeordnete Widerlager trifft. Der zwischen den Quertraversen 17 befindliche Rollenförderer 23 wird bis in die Ebene der äußeren Rollenförderer 41 angehoben. Dann kann ein Transportskid 29 mit einem darauf befindlichen Kfz-Teil vom Rollenförderer 41 auf den Rollenförderer 23 bewegt werden. Der Rollenförderer 23 wird dann abgesenkt und die Quertraversen 17 werden angehoben, bis das Transportskid 29 auf den Aufnahmerahmen 20 aufliegt. Nach dem Verspannen des Transportskids 29 mit den Aufnahmerahmen 20 kann das Transportskid mit dem darauf befindlichen Kfz-Teil 33 durch Anheben oder Absenken der Quertraversen 17 sowie durch Drehen der Aufnahmerahmen 20 um die Achse der Wellen 18 in eine für die Bearbeitung günstige Position gebracht werden. Beispiele dafür sind in den Figuren 3 und 5 wiedergegeben. In Figur 3 erkennt man, daß das Kfz-Bauteil 33 in verschiedener Höhe, zum Beispiel in den Positionen 33 und 34 angeordnet werden kann. In Figur 5 ist dargestellt, daß das Bauteil auch in die Position 35 verschwenkt werden kann.

Nicht dargestellt ist, daß die Bearbeitungsstation auch von der Seite her, also senkrecht zu der durch die Wellen 18 definierten Drehachse beschickt werden kann.

### Bezugszeichenliste

- (1): Grundplatte
- (2): Antriebssäule
- (3): Führungssäule
- (4): Gewindespindel
- (5): Antriebsmotor (Hubantrieb)
- (6): Antriebsmotor (Drehantrieb)
- (7): Lagerbock
- (8): Positionierscheibe
- (9): Abstechscheibe
- (10): pneum. Abstecher
- (11): Kupplung
- (12): Motorträger
- (17): Quertraverse
- (18): Welle
- (19): Klemmeinheit
- (20): Aufnahmerahmen
- (21): Auflage
- (22): Spanneinheit
- (23): Rollenförderer
- (24): Heber
- (25): Ausnehmungen
- (26): Energiekette für Drehantrieb 6
- (29): Transportskid
- (32): Festanschlag
- (33): Kfz-Bauteil (obere Position)
- (34): Kfz-Bauteil (untere Position)
- (35): Kfz-Bauteil (seitlich geschwenkte Position)
- (36): Energiekette für Hubantrieb für 5
- (38): pneum. Abstecher am Hubantrieb
- (39): Lochleiste am Hubantrieb
- (41): Rollenförderer

## Patentansprüche

1. Bearbeitungsstation in Fertigungsstraßen für Kfz, mit einer Aufnahmeeinrichtung für ein Kfz-Teil (33) oder ein dafür vorgesehenes Transportmittel (29), die um eine horizontale Drehachse verdrehbar ist, mit Förderern (41), die vor bzw. hinter der Bearbeitungsstation enden, und mit einem weiteren, zwischen den Förderern (41) angeordneten heb- und senkbaren Förderer (23),
**dadurch gekennzeichnet,**
**daß** die Aufnahmeeinrichtung aus zwei mit gegenseitigem Abstand angeordneten Aufnahmerahmen (20) besteht, die je an einer Quertraverse (17) angeordnet und um die horizontale Drehachse synchron verdrehbar sind, daß jede Quertraverse (17) an zwei beidseits der Drehachse angeordneten Säulen (2, 3) gelagert bzw. geführt ist und beide Quertraversen (17) synchron höhenverstellbar sind,
**daß** die Förderer (41) vor den Quertraversen (17) oberhalb der abgesenkten Quertraversen (17) bzw. den abgesenkten Aufnahmerahmen (20) enden und
**daß** der gegenseitige Abstand dieser Säulen (2, 3) größer als die Breite des Kfz-Teils (33) oder eines Transportmittels (29) für das Kfz-Teil (33) ist.

2. Bearbeitungsstation nach Anspruch 1, **dadurch gekennzeichnet, daß** eine der Säulen jeder Quertraverse (17) für die Aufnahmerahmen (20) als Antriebssäule (2) und die andere Säule als Führungssäule (3) ausgebildet ist.

3. Bearbeitungsstation nach Anspruch 1 oder 2, **dadurch gekennzeichnet, daß** der heb- und senkbare Förderer (23) sich lediglich zwischen den Enden der Aufnahmerahmen (20) erstreckt.

4. Bearbeitungsstation nach Anspruch 1 oder 2, **dadurch gekennzeichnet, daß** der heb- und senkbare Förderer (23) sich bis in den Bereich der Aufnahmerahmen (20) erstreckt und endseitige Ausnehmungen (25) für die Passage der Aufnahmerahmen (20) bei einer Relativbewegung zwischen Aufnahmerahmen (20) und dem Förderer (23) aufweist.

5. Bearbeitungsstation nach einem der Ansprüche 1 bis 4, **dadurch gekennzeichnet, daß** die Förderer (23, 41) als Rollenförderer ausgebildet sind.

## Claims

1. A processing station in motor vehicle production lines, with a mounting means for a motor vehicle part (33) or a transport means (29), which is provided therefor and which is rotatable around a horizontal axis of rotation, with conveyors (41) which end in front of and behind said processing station, and with an additional conveyor (23), which is arranged between said conveyors (41) and can be raised and lowered,
**characterized in that**
said mounting means is comprised of two mounting frames (20), which are arranged at mutually spaced locations from each other, are arranged on said crosshead (17) and are synchronously rotatable around the horizontal axis of rotation, each said crosshead (17) being mounted and guided on two said columns (2,3) arranged at both' sides of the axis of rotation and both said crossheads (17) being synchronously adjustable in height,
the said conveyors (41) end in front of said crossheads (17) above said lowered crossheads (17) and said lowered mounting frames (20), and the mutual distance between said columns (2,3) is greater than the width of said motor vehicle part (33) or of said transport means (29) for said motor vehicle part (33).

2. A processing station pursuant to Claim 1, **characterized in that** one of the columns of each said crosshead (17) for said mounting frames (20) is designed as a drive column (2) and the other column is designed as a guide column (3).

3. A processing station pursuant to Claim 1 or 2, **characterized in that** said conveyor (23), which can be raised and lowered, extends only between the ends of said mounting frames (20).

4. A processing station pursuant to Claim 1 or 2, **characterized in that** said conveyor (23), which can be raised and lowered, extends into the area of said mounting frames (20) and has end-side recesses (25) to allow for the passage of said mounting frames (20) during a relative movement between said mounting frame (20) and said conveyor (23).

5. A processing station pursuant to one of Claims 1 through 4, **characterized in that** said conveyors (23, 41) are designed as roller conveyors.

## Revendications

1. Station d'usinage pour lignes de production d'automobiles avec un dispositif de réception pour un composant d'automobile (33) ou pour un moyen de transport prévu à cet effet (29), ladite station d'usinage étant pivotable autour d'un axe de rotation horizontal, avec des convoyeurs (41) qui aboutissent devant ou derrière la station d'usinage, et avec un autre convoyeur (23) qui est disposé entre les convoyeurs (41) et peut être levé et abaissé,
**caractérisé en ce que**
le dispositif de réception est constitué de deux cadres de réception (20) disposés avec un écart entre eux, qui sont fixés à une traverse (17) et qui peuvent être pivotés de manière synchrone autour de l'axe de rotation horizontal,
**en ce que** chaque traverse (17) est logée ou guidée sur deux colonnes (2, 3) disposées de part et d'autre de l'axe de rotation et que les deux traverses (17) sont réglables en hauteur de manière synchrone,
**en ce que** les convoyeurs (41) aboutissent devant les traverses (17) au-dessus des traverses abaissées (17) ou des cadres de réception abaissés (20) et que l'écart mutuel de ces colonnes (2, 3) est supérieur à la largeur du composant automobile (33) ou d'un moyen de transport (29) pour le composant automobile (33).

2. Station d'usinage selon la revendication 1, **caractérisée en ce qu'**une des colonnes de chaque traverse (17) pour les cadres de réception (20) se présente comme colonne d'entraînement (2) et l'autre colonne comme colonne de guidage (3).

3. Station d'usinage selon la revendication 1 ou 2, **caractérisée en ce que** le convoyeur (23) levable et abaissable se déploie seulement entre les extrémités des cadres de réception (20).

4. Station d'usinage selon la revendication 1 ou 2, **caractérisée en ce que** le convoyeur (23) levable et abaissable se déploie jusque dans la zone des cadres de réception (20) et présente des dégagements (25) en extrémité pour le passage des cadres de réception avec un mouvement relatif entre le cadre de réception (20) et le convoyeur (23).

5. Station d'usinage selon une des revendications 1 à 4, **caractérisée en ce que** les convoyeurs (23, 41) se présentent sous forme de convoyeurs à rouleaux.
